# EUROPÄISCHE PATENTSCHRIFT

(11) **EP 2 999 094 B1**
(45) Veröffentlichungstag und Bekanntmachung des Hinweises auf die Patenterteilung: **27.10.2021**
(21) Anmeldenummer: 14185605.4
(22) Anmeldetag: 19.09.2014
(51) Int. Cl.: H02K 7/00, H02K 11/21, H02K 11/225, F16D 1/02, F16D 1/06, F16D 1/068, F16D 1/027, H02K 11/00

(54) **Anbauwelle für einen Elektromotor, Elektromotor mit einer Anbauwelle, Verwendung einer Anbauwelle als Antriebswelle eines Drehgebers sowie Verfahren zum Verbinden einer Anbauwelle mit einer Motorwelle eines Elektromotors**
Mounting shaft for an electric motor, electric motor with a mounting shaft, use of a mounting shaft as a drive shaft of a rotary encoder and method for connecting a mounting shaft with a motor shaft of an electric motor
Arbre en saillie pour un moteur électrique, moteur électrique doté d'un arbre en saillie, utilisation d'un arbre en saillie en tant qu'arbre de commande d'un encodeur et procédé de liaison d'un arbre en saillie à un arbre de commande d'un moteur électrique

(43) Veröffentlichungstag der Anmeldung: 23.03.2016
(73) Patentinhaber: Siemens Aktiengesellschaft, 80333 München (DE)
(72) Erfinder: Ehrmann, Michael, 72070 Tuebingen (DE)

(56) Entgegenhaltungen:
- EP-A1- 0 232 603
- EP-A1- 0 318 818
- DE-A1-102008 028 657
- DE-U1-202004 015 879
- US-A- 2 119 334
- None

## Beschreibung

Die Erfindung betrifft einen Elektromotor mit einem Drehgeber und einer Anbauwelle.

Bei einem Elektromotor wird bekanntlich elektrische Energie in mechanische Energie umgewandelt und bei der Mehrzahl der Elektromotoren wird dafür eine Motorwelle in Rotation versetzt. An die Motorwelle können mittelbar oder unmittelbar Maschinen, Aggregate oder sonstige Vorrichtungen angekoppelt sein, die mittels des Elektromotors angetrieben werden.

Elektromotoren - im Folgenden mitunter kurz nur als Motoren bezeichnet - sind in unterschiedlichen Ausführungsformen an sich bekannt. Zu den Ausführungsformen gehören insbesondere eigenbelüftete Motoren und fremdbelüftete Motoren sowie Motoren mit angebauter Bremse.

Für eine Drehzahl- und/oder Lageregelung des Elektromotors ist eine Drehzahl- oder Lageerfassung mittels eines Drehgebers notwendig und die Kombination eines Drehgebers mit einem Elektromotor für solche Zwecke ist ebenfalls an sich bekannt. Der Drehgeber ist dabei mit der Motorwelle gekoppelt. Die jeweilige Ausführungsform des Motors erfordert dabei grundsätzlich unterschiedliche, über den Bereich des Rotors/Stators hinausreichende Längen der Motorwelle, um eine Ankopplung zum Beispiel eines Lüfterrads und/oder einer Bremse und jedenfalls die Ankopplung des Drehgebers zu ermöglichen. Zur Vermeidung damit einhergehender, unterschiedlicher Bauformen mit unterschiedlich langen Motorwellen ist bereits bekannt, die Motorwelle mittels einer Anbauwelle auf der zur Ankopplung des Drehgebers vorgesehenen Seite zu verlängern. Die Anbauwelle wird in axialer Richtung der Motorwelle in diese eingesteckt, nämlich indem ein dafür vorgesehener Zapfen in eine zentrierte Sacklochbohrung in die Motorwelle eingeführt und dort fixiert, insbesondere verklebt wird.

Aus der DE 20 2004 015 879 U ist eine Welle-Nabe-Verbindung bekannt, bei der die Welle mehrere zylindrische Abschnitte und zwischen diesen als Klebstoffreservoir fungierende Nuten aufweist. Der Durchmesser der zylindrischen Abschnitte ist so bemessen, dass zu der Innenoberfläche der jeweiligen Nabe ein Spalt (Klebfuge) verbleibt. Dieser Spalt verhindert eine in jedem Fall exakt axiale Ausrichtung der Welle und bei einer nicht exakt axialen Ausrichtung leidet entsprechend die Rundlaufgenauigkeit der Welle. Aus der EP 0 318 818 A ist eine Anordnung mit einer Klebeverbindung zwischen einer Nabe und einem Rohr bekannt. Die Nabe weist voneinander mit axialem Abstand angeordnete Zentrierungen auf, die bei einer in ein Rohr eingeführten Nabe über den ganzen Umfang an der Innenwandung des Rohrs anliegen und zwischen sich ein Volumen zum Einführen von Klebstoff einschließen, so dass Klebstoff von außen in dieses Volumen durch eine dafür vorgesehene axiale Öffnung eingepresst werden und Luft aus dem Volumen durch eine andere axiale Öffnung entweichen kann.

Die Druckschrift EP 0 318 818 A1 offenbart eine Klebeverbindung zwischen einer Nabe und einem Rohr. Die Nabe weist einen konischen Abschnitt auf, der an einem Ende in das Rohr einführbar ist. Zwischen dem konischen Abschnitt und einer Innenwand des Rohrs ist ein Ringspalt ausbildbar, der mit einem Klebstoff füllbar ist.

Aus der Offenlegungsschrift EP 0 232 603 A1 ist ein Verfahren zum Verbinden von zwei Bauteilen bekannt, die unterschiedliche Wärmeausdehnungskoeffizienten aufweisen. An einer Schnittfläche, an der eine Verbindung herzustellen ist, ist zumindest eines der Bauteile konisch ausgebildet. Die Verbindung ist durch Löten oder Kleben herstellbar.

Das amerikanische Patent US 2,119,334 A zeigt eine selbstsichernde Verbindung für rotierende Komponenten, bei der eine der Komponenten mit schraubenlinienförmigen Nuten versehen ist. Die schraubenlinienförmigen Nuten können dabei an einer Außenfläche eines Zapfens ausgebildet sein, oder an einer Innenfläche einer Nabe. Aus der Offenlegungsschrift DE 10 2208 028 657 A1 ist ein Elektromotor mit einem Geber bekannt, der mit einer Spreizwelle zusammenwirkt, die an einem Ende einer Rotorwelle angeordnet ist. Die Spreizwelle ist dazu in eine Ausnehmung am Ende der Rotorwelle eingesteckt und mit dieser kraftschlüssig verbunden.

Ein Problem bei bisherigen Anbauwellen sowie deren Verbindung mit der Motorwelle besteht in der mitunter nicht optimierten Festigkeit der Verbindung zwischen der Motorwelle und der Anbauwelle und/oder der mitunter ebenfalls nicht ganz zufriedenstellenden Rundlaufgenauigkeit der Anbauwelle.

Eine Aufgabe der vorliegenden Erfindung besteht entsprechend darin, eine Anbauwelle anzugeben, die solche Nachteile vermeidet oder zumindest reduziert. Darauf basierend bestehen weitere Aufgaben der vorliegenden Erfindung darin, einen Elektromotor mit einer solchen Anbauwelle, die Verwendung einer solchen Anbauwelle als Antriebswelle eines Drehgebers sowie ein Verfahren zum Verbinden einer solchen Anbauwelle mit einer Motorwelle eines Elektromotors anzugeben.

Diese Aufgabe wird mit den Merkmalen des Patentanspruchs 1 gelöst. Dabei ist bei einer Anbauwelle für einen Elektromotor, welche abschnittsweise in eine zentrierte Sacklochbohrung in einer Motorwelle des Elektromotors einführbar und dort durch Verkleben fixierbar ist, Folgendes vorgesehen: Das in die Sacklochbohrung einführbare, zapfenartige Ende der Anbauwelle umfasst eine Mehrzahl von zylindrischen oder zumindest hinsichtlich ihrer Hüllkontur rotationssymmetrischen Abschnitten, die gegebenenfalls angefast sind. Die einzelnen, aufeinander folgenden Abschnitte werden zur Unterscheidung - vom freien Ende aus gesehen - als erster, zweiter, dritter und vierter Abschnitt bezeichnet. Die Durchmesser der einzelnen Abschnitte werden entsprechend der Nummerierung der Abschnitte als erster, zweiter, dritter und vierter Durchmesser bezeichnet. Der erste Durchmesser ist dabei geringer als ein Innendurchmesser der Sacklochbohrung. Bei den vier unterschiedlichen Abschnitten sind die Durchmesser des zweiten und vierten Abschnitts gleich groß. Der zweite Durchmesser entspricht also dem vierten Durchmesser. Der Durchmesser des zwischen dem zweiten und vierten Abschnitt liegenden dritten Abschnitts der Anbauwelle ist demgegenüber kleiner als der zweite oder vierte Durchmesser. Der Durchmesser des ersten Abschnitts ist zumindest kleiner als der zweite oder vierte Durchmesser, insbesondere genauso groß wie der Durchmesser im dritten Abschnitt. Erfindungsgemäß ist dem Elektromotor ein Drehgeber zugeordnet, wobei das freie Ende einer solchen Anbauwelle als Antriebswelle des Drehgebers fungiert.

Der Vorteil der Erfindung besteht darin, dass der zweite und der vierte Abschnitt (mit dem im Vergleich zum dritten Abschnitt größeren Durchmesser) zur Fixierung der Anbauwelle in der Sacklochbohrung wirksam sind. Dafür ist der zweite und vierte Durchmesser so gewählt, dass sich im eingeführten Zustand zumindest eine leichte Presspassung mit der Sacklochbohrung der Motorwelle ergibt. Die beiden durch den dritten Abschnitt voneinander getrennten Abschnitte (zweiter und vierter Abschnitt) bewirken dabei eine streng axiale Ausrichtung der Anbauwelle mit der Drehachse der Motorwelle, verhindern also eine Schiefstellung der Anbauwelle und gewährleisten eine hohe Rundlaufgenauigkeit. Zumindest der dritte Abschnitt mit dem im Vergleich zum seitlich angrenzenden zweiten und vierten Abschnitt geringeren Durchmesser kommt als Ort zum definierten Auftragen von Klebstoff oder dergleichen in Betracht. Aufgrund der seitlich angrenzenden Abschnitte (zweiter und vierter Abschnitt) mit größerem Durchmesser wird dort aufgetragener Klebstoff beim Einführen in die Sacklochbohrung nicht abgestreift. Es ist folglich sichergestellt, dass sich beim und nach dem Einführen der Anbauwelle in die Sacklochbohrung stets Klebstoff auf der Oberfläche des dritten Abschnitts befindet. Durch die Wahl einer geeigneten Differenz zwischen dem Durchmesser der umgebenden zweiten und vierten Abschnitte und dem Durchmesser des dritten Abschnitts ergibt sich eine optimal auf den jeweiligen Klebstoff optimierte Klebespaltweite.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform der Anbauwelle wird der zweite und vierte zylindrische Abschnitt mit einer Passung in Toleranzklasse IT6 oder feiner und endsprechendem Toleranzfeld (z.B. "m") durch Schleifen oder Drehen hergestellt. Durch die Auswahl einer Toleranz in der Bohrung der Motorwelle von H7 oder feiner wird in diesem Bereich eine besonders maßgenaue Passung erreicht. Dies verbessert die Rundlaufgenauigkeit.

Bei einer weiteren oder alternativen Ausführungsform der Anbauwelle ist die Oberfläche des dritten zylindrischen Abschnitts, insbesondere die Oberfläche des ersten zylindrischen Abschnitts und die Oberfläche des dritten zylindrischen Abschnitts, rauer als die Oberfläche des zweiten und vierten zylindrischen Abschnitts. Dies lässt sich zum Beispiel dadurch erreichen, dass die Oberfläche des zweiten und vierten Abschnitts geschliffen ist und die Oberfläche des dritten Abschnitts oder die Oberfläche des ersten und dritten Abschnitts gedreht ist. Durch die erhöhte Rauheit der Oberfläche des dritten Abschnitts oder des ersten und dritten Abschnitts ergeben sich eine besonders gute Benetzung mit Klebstoff und ebenso eine besonders gute Adhäsion des Klebstoffs. Dies verbessert die Festigkeit der Verbindung mit der Motorwelle.

Bei einer weiteren Ausführungsform der Anbauwelle weist diese zumindest eine insbesondere schraubenlinienförmige Entlüftungsnut in dem Bereich vom ersten zylindrischen Abschnitt bis zum vierten zylindrischen Abschnitt auf. Die oder jede Entlüftungsnut ist in der Oberfläche des in die Sacklochbohrung der Motorwelle einführbaren Teils der Anbauwelle (Zapfen) gebildet und erlaubt beim Einführen in die Sacklochbohrung ein Entweichen der dortigen Luft.

Insgesamt ist die Erfindung ein Elektromotor mit einer Anbauwelle der hier und im Folgenden beschriebenen Art, ein Elektromotor, dem ein Drehgeber zugeordnet ist, wobei ein freies Ende einer solchen Anbauwelle als Antriebswelle des Drehgebers fungiert. Bei dem erfindungsgemäßen Elektromotor wirken sich die erreichte erhöhte Festigkeit der Fügeverbindung zwischen Motorwelle und Anbauwelle sowie die erreichte erhöhte Rundlaufgenauigkeit der Anbauwelle in besonders günstiger Art und Weise aus. Aufgrund der erhöhten Festigkeit der Fügeverbindung ist die Ankopplung des Drehgebers an den Elektromotor besonders belastbar. Aufgrund der erhöhten Rundlaufgenauigkeit resultiert eine erhöhte Genauigkeit des oder jedes vom Drehgeber erhältlichen Messwerts, insbesondere eines Lage- oder Drehzahlmesswerts. Der mit dem Elektromotor gebildete Antrieb kommt dann auch für den Anbau von funktional sicheren Drehgebern in Betracht.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Motorwelle/Rotor eines Elektromotors,
- FIG 2: einen teilweise geschnittenen Ausschnitt aus der Darstellung in FIG 1 mit einer in einem Ende der Motorwelle gebildeten zentrierten Sacklochbohrung,
- FIG 3: bis
- FIG 6: unterschiedliche Ausführungsformen von Anbauwellen, die mittels eines in die Sacklochbohrung einführbaren Zapfens mit einer Motorwelle eines Elektromotors koppelbar sind,
- FIG 7: eine Schnittdarstellung eines Abschnitts eines Elektromotors mit dessen Motorwelle, einer an die Motorwelle angekoppelten Anbauwelle und mit einem Drehgeber, wobei die Anbauwelle als Antriebswelle des Drehgebers fungiert,
- FIG 8: Details zur Geometrie des zum Einführen in die Sacklochbohrung bestimmten Zapfens einer Motorwelle nach dem Stand der Technik und
- FIG 9: eine Ausführungsform des Zapfens entsprechend dem hier vorgeschlagenen Ansatz.

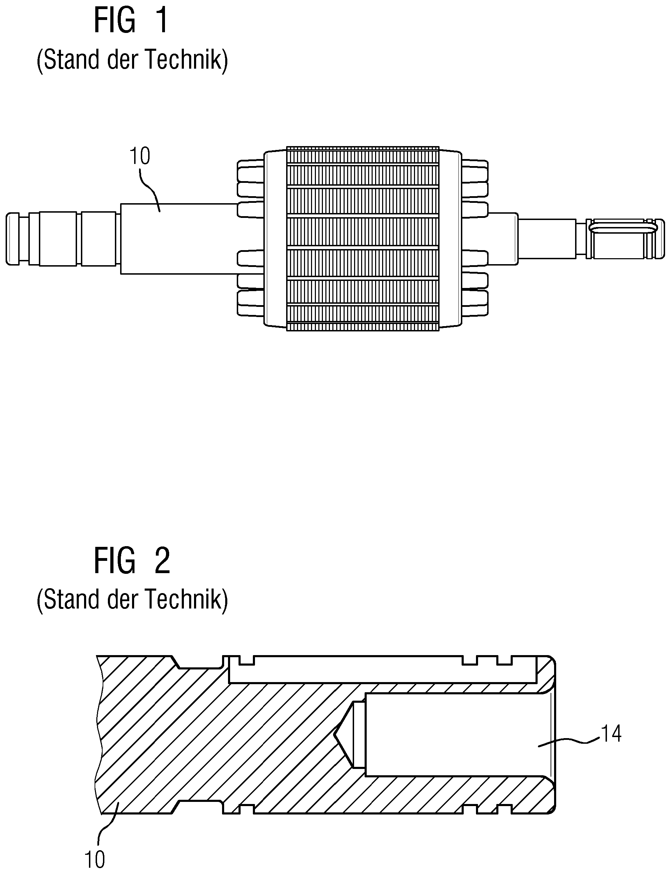

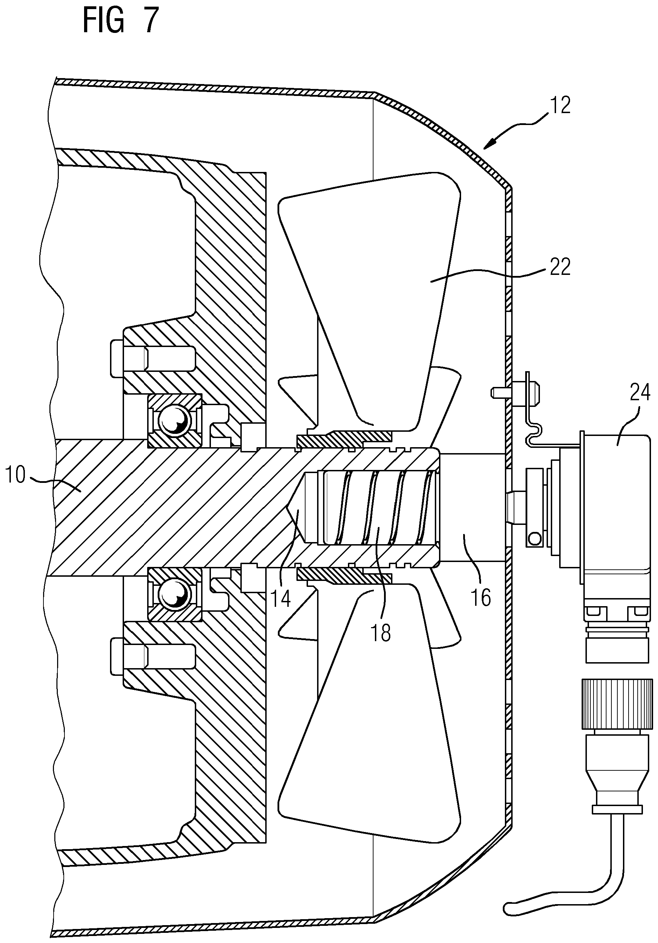

Die Darstellung in FIG 1 zeigt einen an sich bekannten Rotor sowie eine davon ausgehende Motorwelle 10 eines hier nicht dargestellten, aber ebenfalls grundsätzlich an sich bekannten Elektromotors 12 (FIG 7). Grundsätzlich kommt die Erfindung aber zur Verwendung mit jeder Art von Welle in Betracht, so dass bei jeder Erwähnung einer Motorwelle 10 auch andere Wellen mitzulesen sind. Die gezeigte Motorwelle 10 weist auf einer freien Seite eine zentrierte Sacklochbohrung 14 auf, wie dies die Schnittdarstellung des betreffenden Endes der Motorwelle 10 in der Darstellung in FIG 2 zeigt.

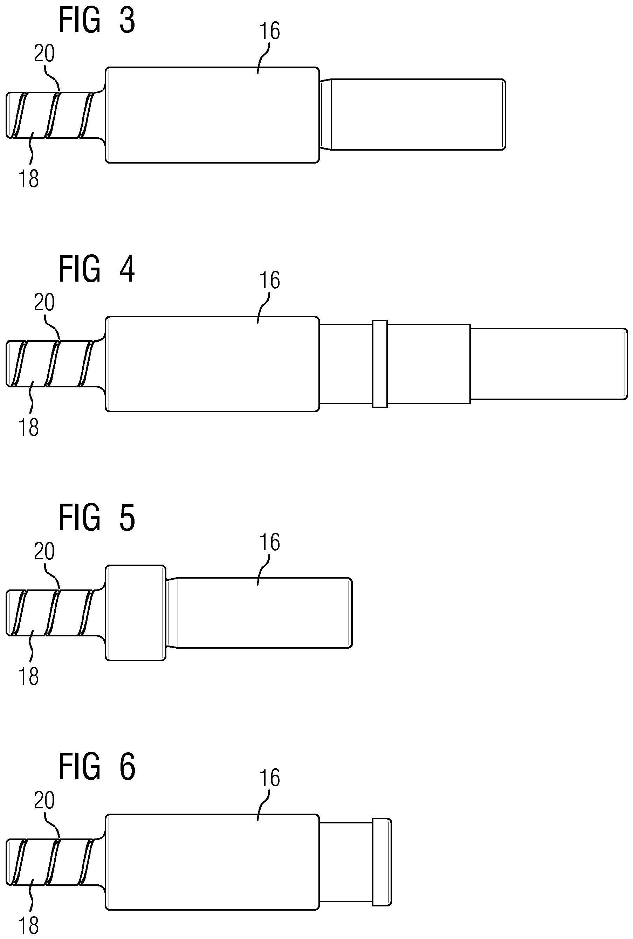

Die Darstellungen in FIG 3 bis FIG 6 zeigen unterschiedliche Anbauwellen 16, die jeweils einseitig einen zentrierten Zapfen 18 aufweisen und mittels dieses Zapfens 18 an die Motorwelle 10 eines Elektromotors 12 ankoppelbar sind, indem der Zapfen 18 in deren Sacklochbohrung 14 eingeführt wird. Um beim Einführen des Zapfens 18 in die Sacklochbohrung 14 ein Entweichen der dortigen Luft zu ermöglichen, ist in der Oberfläche des Zapfens 18 zumindest eine Entlüftungsnut 20 gebildet.

Die Darstellung in FIG 7 zeigt einen Teil eines an sich bekannten Elektromotors 12. Erkennbar sind die Motorwelle 10 und die mit der Motorwelle 10 verbundene Anbauwelle 16. Die Verbindung der Anbauwelle 16 mit der Motorwelle 10 besteht, indem der Zapfen 18 der Anbauwelle 16 in die Sacklochbohrung 14 der Motorwelle 10 eingeführt ist.

An die Motorwelle 10 ist ein Lüfterrad 22 angekoppelt. Bei dem beispielhaft dargestellten Elektromotor 12 handelt es sich folglich um einen eigenbelüfteten Motor 12. An das freie Ende der Anbauwelle 16 ist ein Drehgeber 24 angekoppelt. Anhand der Darstellung in FIG 3 bis FIG 6 wird deutlich, dass aufgrund verschiedenster Ausführungsformen der Anbauwellen 16, insbesondere aufgrund unterschiedlicher Längen solcher Anbauwellen 16, die (mittelbare) Ankopplung eines Drehgebers 24 an die Motorwelle 10 auch bei unterschiedlichen Ausführungsformen des jeweiligen Elektromotors 12 und daraus resultierender Maße (mit oder ohne Bremse, mit oder ohne Eigenbelüftung, mit oder ohne Fremdbelüftung, usw.) möglich ist.

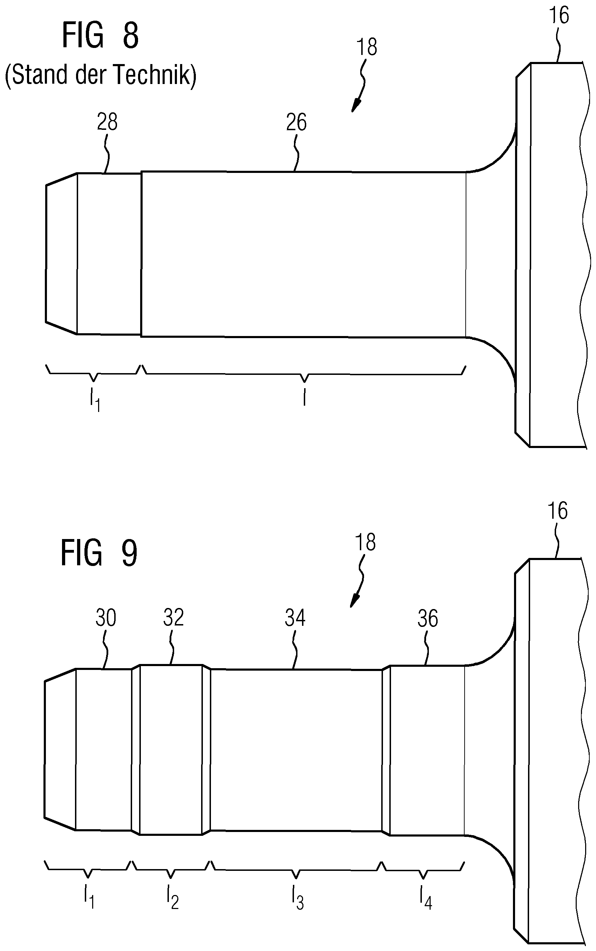

Die Darstellungen in FIG 8 und FIG 9 zeigen den Zapfen 18 ("Anbauwellenzapfen") der Anbauwelle 16 mit weiteren Details. Die Darstellung in FIG 8 zeigt eine bereits bekannte Ausführungsform des Zapfens 18. Die Darstellung in FIG 9 zeigt eine Ausführungsform des Zapfens 18 gemäß der Erfindung.

Bei der bekannten Ausführungsform (FIG 8) handelt es sich um einen Zapfen 18 mit einem zylindrischen Abschnitt 26 der Länge l mit einer Tolerierung z.B. j6 für eine Übergangspassung mit der Sacklochbohrung 14 mit einer Tolerierung z.B. H7. Die Oberfläche des zylindrischen Abschnitts 26 ist üblicherweise geschliffen. Vor dem zylindrischen Abschnitt 26 befindet sich noch ein angefaster, üblicherweise gedrehter Einführungsabschnitt 28 der Länge l1 mit einem geringfügig geringeren Durchmesser.

Klebstoff zum Fixieren des Zapfens 18 in der Sacklochbohrung 14 und damit zum Fixieren der Anbauwelle 16 an der Motorwelle 10 wird auf die Oberflächen der zylindrischen Abschnitte 26, 28 aufgetragen. In der Oberfläche der zylindrischen Abschnitte 26, 28 ist eine hier nicht gezeigte (siehe FIG 3 bis FIG 6), oftmals schraubenlinienförmige Entlüftungsnut 20 gebildet.

Bei der hier vorgeschlagenen und exemplarisch in FIG 9 dargestellten Ausführungsform des Zapfens 18 ("Anbauwellenzapfen") der Anbauwelle 16 fällt dessen Unterteilung in vier Abschnitte, nämlich einen ersten Abschnitt 30 mit der Länge l1 (Einführungsabschnitt), einen zweiten Abschnitt 32 mit der Länge l2, einen dritten Abschnitt 34 mit der Länge l3 und einen vierten Abschnitt 36 mit der Länge l4, auf. An die Stelle des zuvor (FIG 8) durchgehend zylindrischen Abschnitts 26 der Länge l treten der zweite, der dritte und der vierte Abschnitt 32, 34, 36. Die Summe der Längen l2, l3 und l4 entspricht oder entspricht zumindest im Wesentlichen der Länge l des zuvor durchgehend zylindrischen Abschnitts 26.

Die Besonderheit des Zapfens 18 besteht in der Wahl und der Abfolge der Durchmesser der vier Abschnitte 30-36. Der erste, oftmals angefaste Abschnitt 30 fungiert als Einführungsabschnitt und weist entsprechend einen im Vergleich zum Innendurchmesser der Sacklochbohrung 14 geringeren Durchmesser auf, also zum Beispiel einen Durchmesser mit einer Tolerierung d9 (Spielpassung), so dass der erste Abschnitt 30 leicht in die Sacklochbohrung 14 einführbar ist. Der zweite und der vierte Abschnitt 32, 36 weisen zum Beispiel einen Durchmesser mit einer Tolerierung m6 auf und fungieren damit beim in die Sacklochbohrung 14 eingeführten Zapfen 18 als Sitze und bewirken eine leichte Presspassung mit der Sacklochbohrung 14 mit einer Tolerierung H7. Die beiden voneinander beabstandeten Sitze (zweiter Abschnitt 32, vierter Abschnitt 36) gewährleisten die hohe Genauigkeit bei der axialen Ausrichtung der Anbauwelle 16 mit der Motorwelle 10 und im Ergebnis die erreichte hohe Rundlaufgenauigkeit der Anbauwelle 16. Die Oberfläche der beiden Sitze (zweiter Abschnitt 32, vierter Abschnitt 36) ist zum Beispiel geschliffen oder gedreht. Der Durchmesser des dritten Abschnitts 34 ist kleiner als die Durchmesser des zweiten und vierten Abschnitts 32, 36. Hier kommt als Durchmesser zum Beispiel ein Durchmesser mit einer Tolerierung d9 in Betracht. Zumindest in diesem Bereich, optional auch auf allen anderen Abschnitten 30-36, insbesondere auf allen anderen Abschnitten 30-36 sowie in der Sacklochbohrung 14 selbst, wird zur Fixierung des Zapfens 18 in der Sacklochbohrung 14 ein Klebstoff oder dergleichen aufgetragen. Der in Einführrichtung des Zapfens 18 in die Sacklochbohrung 14 vor dem dritten Abschnitt 34 liegende zweite Abschnitt 32 mit dem dortigen größeren Durchmesser bewirkt, dass der im dritten Abschnitt 34 aufgetragene Klebstoff beim Einführen in die Sacklochbohrung 14 nicht abgestreift wird.

Die Vorteile des hier beschriebenen Ansatzes lassen sich wie folgt zusammenfassen: Eine deutliche Erhöhung der Festigkeit der Klebeverbindung wird durch den Bereich mit reduziertem Durchmesser (dritter Abschnitt 34) zwischen den beiden Sitzen (zweiter Abschnitt 32, vierter Abschnitt 36) oder die Bereiche mit reduziertem Durchmesser (erster und dritter Abschnitt 30, 34) angrenzend an die beiden Sitze erreicht. Dort ergibt sich durch eine geeignete Wahl des jeweiligen Durchmessers eine definierte, auf den jeweiligen Klebstoff optimierte Klebespaltweite. Weil zumindest der Klebstoff im dritten Abschnitt 34 durch den beim Einführen/Fügen vorangehenden Abschnitt (zweiter Abschnitt 32) mit größerem Durchmesser gleichsam abgeschirmt wird, ist sichergestellt, dass der Klebstoff im dritten Abschnitt 34 beim Einführen/Fügen nicht abgestreift wird. Mit der geeigneten Wahl der Länge des dritten Abschnitts 34 oder der Länge des ersten und dritten Abschnitts 30, 34 ergibt sich eine optimale Größe der mit Klebstoff versehenen Kontaktfläche. Durch eine geeignete Wahl der Oberflächenstruktur in dritten Abschnitt 34 oder im ersten und im dritten Abschnitt 30, 34 ergibt sich eine optimale Benetzung durch den Klebstoff und eine ebenfalls optimale Adhäsion des Klebstoffs. In dieser Hinsicht kommt zum Beispiel eine gedrehte Oberfläche in Betracht. Die dabei resultierende Rauheit bewirkt eine solche Benetzung und Adhäsion. Ein "Auswandern"/ Herausgedrücktwerden der Anbauwelle 16 während des Aushärtens des Klebstoffs ist durch die mittels des zweiten und vierten Abschnitts 32, 36 bewirkten Presspassungen wirksam vermieden. Diese Presspassungen bewirken einen koaxialen, spielfreien Sitz der Anbauwelle 16 in der Sacklochbohrung 14 der aufnehmenden Welle, zum Beispiel einer Motorwelle 10, verhindern eine Schiefstellung der Anbauwelle 16 und gewährleisten eine hohe Rundlaufgenauigkeit der Anbauwelle 16. Zudem geschieht das Fügen, also das Einführen des Zapfens 18 in diese Sacklochbohrung 14, mit geringem Kraftaufwand, so dass ein Verbiegen der Anbauwelle 16 vermieden wird. Im Ergebnis erübrigt sich damit ein Ausrichten der Anbauwelle 16 nach dem Einbau potenziell vollständig und die Kombination mit der jeweiligen Welle, insbesondere einer Motorwelle 10 eines Elektromotors 12, kommt auch für Anwendungsfälle mit hohen Anforderungen an die Rundlaufgenauigkeit der montierten Anbauwelle 16 in Betracht.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Vorgeschlagen wird eine Anbauwelle 16 für einen Elektromotor 12 oder eine sonstige Maschine mit einem zum Einführen in eine Sacklochbohrung 14 in einer Motor- oder sonstigen Welle 10 vorgesehenen Zapfen 18, wobei der Zapfen 18 Abschnitte 30-36 mit unterschiedlichen Durchmessern aufweist, welche bewirken, dass die Anbauwelle 16 einerseits koaxial mit der Welle 10 ausgerichtet ist und andererseits auf den Zapfen 18 aufgetragener Klebstoff beim Fügen nicht abgestreift wird und ein definierter Klebespalt eingehalten wird.

## Patentansprüche

1. Elektromotor (12) mit einem Drehgeber (24) und einer Anbauwelle (16), die abschnittsweise in eine zentrierte Sacklochbohrung (14) in einer Motorwelle (10) des Elektromotors (12) eingeführt und dort fixiert ist,
wobei ein in die Sacklochbohrung (14) eingeführtes Ende der Anbauwelle (16) als zentrierter Zapfen (18) ausgebildet ist, und
vom in die Sacklochbohrung (14) eingeführten Ende aus gesehen einen ersten zylindrischen Abschnitt (30) mit einem ersten Durchmesser aufweist, der geringer ist als ein Innendurchmesser der Sacklochbohrung (14),
daran anschließend einen zweiten zylindrischen Abschnitt (32) mit einem zweiten Durchmesser,
daran anschließend einen dritten zylindrischen Abschnitt (34) mit einem dritten Durchmesser und wiederum
daran anschließend einen vierten zylindrischen Abschnitt (36) mit einem vierten Durchmesser aufweist,
**dadurch gekennzeichnet,**
**dass** der zweite und der vierte Durchmesser gleich groß sind, dass der zweite und der vierte zylindrische Abschnitt (32, 36) in der Sacklochbohrung (14) als Sitze fungieren, die eine Presspassung bewirken, und
**dass** der erste und der dritte Durchmesser kleiner als der zweite oder vierte Durchmesser sind, und dass die erste Oberfläche der Anbauwelle im Bereich des dritten Abschnitts mit einem Klebstoff versehen ist, und der Drehgeber (24)an dem der Motorwelle (10) abgewandten Ende der Anbauwelle (16) angeordnet ist, welches als Antriebswelle des Drehgebers (24) fungiert.

2. Elektromotor (12) nach Anspruch 1,
wobei eine Oberfläche im Bereich des zweiten und vierten zylindrischen Abschnitts (32, 36) geschliffen oder gedreht ist.

3. Elektromotor (12) nach Anspruch 1 oder 2,
wobei eine Oberfläche zumindest im Bereich des dritten zylindrischen Abschnitts (34) rauer als die Oberfläche im Bereich des zweiten und vierten zylindrischen Abschnitts (32, 36) ist.

4. Elektromotor (12) nach einem der vorangehenden Ansprüche, mit zumindest einer schraubenlinienförmigen Entlüftungsnut (20) im Bereich vom ersten zylindrischen Abschnitt (30) bis zum vierten zylindrischen Abschnitt (36).

## Claims

1. Electric motor (12) with a rotary encoder (24) and an add-on shaft (16), which add-on shaft is introduced section by section into a centred blind hole (14) in a motor shaft (10) of the electric motor (12) and is fixed there,
wherein an end of the add-on shaft (16) introduced into the blind hole (14) is embodied as a centred pin (18), and has, when viewed from the end introduced into the blind hole (14), a first cylindrical section (30) having a first diameter which is less than an internal diameter of the blind hole (14), followed by a second cylindrical section (32) having a second diameter,
followed by a third cylindrical section (34) having a third diameter and in turn
followed by a fourth cylindrical section (36) having a fourth diameter,
**characterised in that**
the second and the fourth diameter are equal in size,
the second and the fourth cylindrical sections (32, 36) act in the blind hole (14) as seats, which bring about an interference fit, and
the first and the third diameters are smaller than the second or fourth diameter, and the first surface of the add-on shaft is provided with an adhesive in the region of the third section, and the rotary encoder (24) is arranged on the end of the add-on shaft (16) facing away from the motor shaft (10), which acts as a drive shaft for the rotary encoder (24).

2. Electric motor (12) according to claim 1,
wherein a surface in the region of the second and fourth cylindrical section (32, 36) is ground or turned.

3. Electric motor (12) according to claim 1 or 2,
wherein a surface at least in the region of the third cylindrical section (34) is rougher than the surface in the region of the second and fourth cylindrical sections (32, 36).

4. Electric motor (12) according to one of the preceding claims,
having at least one helical venting groove (20) in the region from the first cylindrical section (30) to the fourth cylindrical section (36).

## Revendications

1. Moteur (12) électrique comprenant un encodeur (24) et un arbre (16) rapporté, qui par tronçon est introduit dans un alésage (14) borgne centré de l'arbre (10) du moteur (12) électrique et y est immobilisé,
dans lequel un bout, introduit dans l'alésage (14) borgne, de l'arbre (16) rapporté est constitué sous la forme d'un tourillon (18) centré, et
considéré de l'extrémité introduite dans l'alésage (14) borgne, un premier tronçon (30) cylindrique a un premier diamètre, qui est plus petit qu'un diamètre intérieur de l'alésage (14) borgne,
vient ensuite un deuxième tronçon (32) cylindrique d'un deuxième diamètre,
vient ensuite un troisième tronçon (34) cylindrique d'un troisième diamètre, et à nouveau
vient ensuite un quatrième tronçon (36) cylindrique d'un quatrième diamètre,
**caractérisé**
**en ce que** le deuxième et le quatrième diamètres sont égaux,
**en ce que** le deuxième et le quatrième tronçons (32, 36) cylindriques servent dans l'alésage (14) borgne de sièges, qui provoquent un ajustage serré, et
**en ce que** le premier et le troisième diamètres sont plus petits que le deuxième ou le quatrième diamètres et en ce que la première surface de l'arbre rapporté est dans la région de troisième tronçon pourvu d'une colle et l'encodeur (24) est disposé au bout, loin de l'arbre (10) du rotor, de l'arbre (16) rapporté, qui sert d'arbre d'entraînement de l'encodeur (24).

2. Moteur (12) électrique suivant la revendication 1,
dans lequel une surface dans la partie du deuxième et quatrième tronçon (32, 36) cylindrique est rectifiée ou façonnée au tour.

3. Moteur (12) électrique suivant la revendication 1 ou 2,
dans lequel une surface au moins dans la partie du troisième tronçon (34) cylindrique est plus rugueuse que la surface dans la partie du deuxième et du quatrième tronçon (32, 36) cylindrique.

4. Moteur (12) électrique suivant l'une des revendications précédentes, comprenant au moins une rainure (20) hélicoïdale d'évacuation de l'air dans la partie allant du premier tronçon (30) cylindrique au quatrième tronçon (36) cylindrique.
